# FASCICULE DE BREVET EUROPEEN

(11) **EP 1 024 330 B1**
(45) Date de publication et mention de la délivrance du brevet: **27.11.2002**
(21) Numéro de dépôt: 00460008.6
(22) Date de dépôt: 25.01.2000
(51) Int. Cl.: F24D 19/10, G05D 23/19

(54) **Dispositif de régulation de chauffage à circulation d'eau**
Regelvorrichtung für eine Heizung mit umlaufendem Wasser
Control device for heating with circulating water

(30) Priorité: 27.01.1999 FR 9901067
(43) Date de publication de la demande: 02.08.2000
(73) Titulaire: Micrel Société Anonyme, 56700 Hennebont (FR)
(72) Inventeur: Malaval, Jean-Luc, 91270, Vigneux sur Seine (FR)
(74) Mandataire: Bentz, Jean-Paul

(56) Documents cités:
- EP-A- 0 513 443
- EP-A- 0 805 311
- WO-A-99/09780
- DE-A- 4 134 865
- DE-C- 4 022 935
- GB-A- 2 216 293
- US-A- 4 969 508

## Description

La présenté invention concerne un dispositif de régulation de chauffage à circulation d'eau.

Dans les chauffages à circulation d'eau où la régulation s'opère au niveau de chaque radiateur, chacun est pourvu d'un organe de régulation composé d'une vanne et d'une tête thermostatique, laquelle est réglable en terme de température de consigne.

Une telle régulation, radiateur par radiateur, présente une multiplicité d'inconvénients:
- elle ne permet pas une gestion centralisée du chauffage par zones, une zone pouvant couvrir une ou plusieurs pièces d'un habitat et contenir un ou plusieurs radiateurs;
- la tête thermostatique étant généralement disposée à proximité du corps chaud du radiateur, la température de consigne faisant agir celui-ci sera sensiblement différente de la température ambiante de la pièce; cet effet pouvant en pratique être aggravé par la présence d'une fenêtre ou d'un rideau du-dessus du radiateur.

Pour pallier tout ou partie des inconvénients précités, on connaît, de par la demande de brevet allemand DE 41 34 865, un dispositif de régulation de la température d'une habitation comportant une unité de commande unique et des capteurs de température ambiante dans chaque pièce de l'habitation. Ces capteurs sont placés à une distance suffisante du radiateur pour produire une information de température représentative de la température réelle de la pièce. Ces capteurs sont reliés par des câbles électriques à l'unité de commande. L'unité de commande est, quant à elle, en relation avec les vannes de régulation des radiateurs de chaque pièce via une liaison radio. Elle leur envoie des informations de commande en fonction des températures relevées dans chaque pièce et des consignes de température préalablement définies pour chaque pièce.

La principale limitation de ce dispositif se situe au niveau de son autonomie de fonctionnement. En effet, l'unité de commande et les vannes de régulation des radiateurs consomment une quantité non négligeable d'énergie. Si ces éléments sont alimentés avec des piles ou des batteries, leur autonomie est inférieure à un an.

Un but de l'invention est de proposer un dispositif de régulation alimenté par piles ou batteries ayant une autonomie de fonctionnement améliorée.

Un autre but de l'invention est de proposer un dispositif de régulation qui soit facilement adaptable aux vannes de régulation des radiateurs à circulation d'eau existant sur le marché.

A cet effet, on prévoit selon l'invention de commander les vannes de régulation des radiateurs à l'aide d'une unité de gestion centrale et d'une pluralité d'unités de gestion locale gérant chacune un groupe de radiateurs correspondant à une zone de l'habitation. Chaque radiateur communiqué directement avec l'unité de gestion centrale et une unité de gestion locale. L'envoi d'informations de commande est assuré par plusieurs unités de gestion au lieu d'une seule comme c'est le cas dans l'art antérieur, ce qui permet d'obtenir un temps de fonctionnement réduit pour chacune des unités de gestion locale ou centrale du dispositif et leur confère une bonne autonomie de fonctionnement lorsqu'elles sont alimentées par piles ou batterie.

Par ailleurs, pour augmenter l'autonomie de fonctionnement des moyens d'actionnement de la vanne de régulation d'un radiateur, on prévoit selon l'invention d'actionner la vanne de régulation à l'aide d'un moteur ayant une transmission dont le rapport de démultiplication est très élevé de manière à privilégier l'autonomie de fonctionnement du moteur par rapport à la vitesse de réponse.

Aussi, l'invention concerne un dispositif de régulation de chauffage à circulation d'eau tel que défini dans la revendication 1.

De préférence, les moyens d'actionnement des vannes de régulation des radiateurs comporte en outre un second ressort pour solliciter le poussoir à l'opposé de la tige de la vanne de régulation, ledit second ressort sensiblement de même puissance que le premier ressort conduisant à diminuer considérablement l'énergie nécessaire pour mouvoir ladite tige.

L'utilisation d'un rapport de démultiplication élevé et d'un second ressort pour solliciter le poussoir à l'opposé de la tige de la vanne de régulation contribuent à diminuer fortement la consommation des moyens d'actionnement.

Selon une autre caractéristique de l'invention et dans le même souci de limiter la consommation d'énergie, l'unité de gestion centrale et les unités de gestion locale ont chacune des fenêtres d'émission différentes et non recouvrantes et le récepteur des moyens d'actionnement des vannes de régulation des radiateurs est synchronisé sur l'unité de gestion centrale et l'unité de gestion locale correspondante de manière à ne se mettre en réception que pendant les fenêtres d'émission de ces unités.

D'autres caractéristiques et avantages de l'invention apparaîtront à la lecture de la description détaillée qui suit et qui est faite en référence aux dessins annexés, parmi lesquels :
- la Fig. 1 est une vue globale sous forme de schéma d'un dispositif de régulation de l'invention;
- la Fig. 2 est une vue schématique de principe de la commande mécanique d'une vanne de régulation dans un dispositif de l'invention; et
- les Figs. 3 à 5 sont respectivement des vues schématiques en perspective, de côté et de bout d'un ensemble de commande mécanique selon le principe de la Fig.2, dans une forme de réalisation préférée.

Selon l'invention, le dispositif de régulation comporte une pluralité de radiateurs répartis en groupes, une unité de gestion centrale et une pluralité d'unités de gestion locale destinées chacune à gérer un groupe de radiateurs.

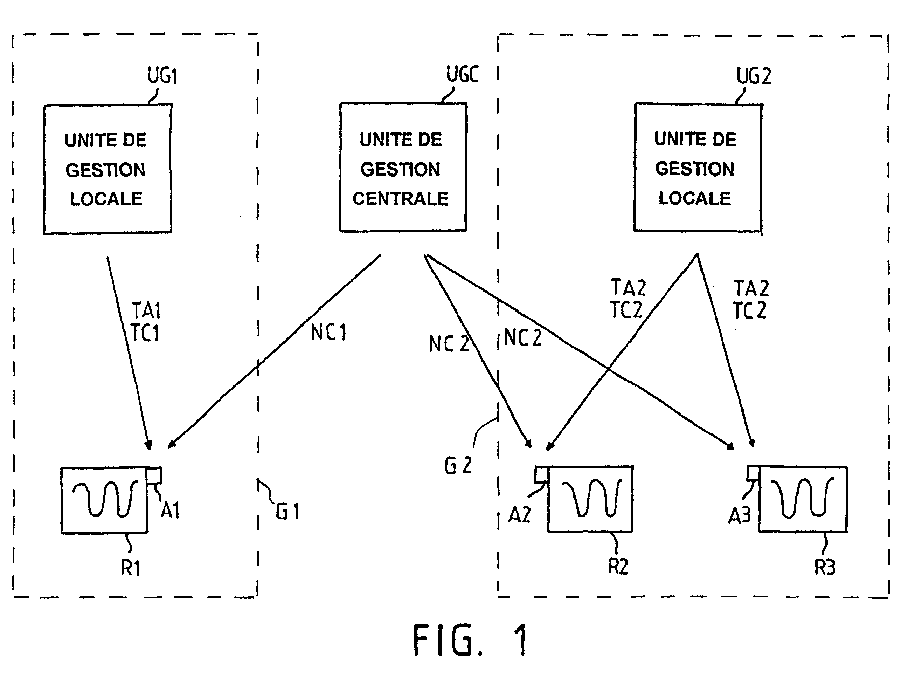

La Fig. 1 représente une vue schématique d'un dispositif de régulation selon l'invention. Ce dispositif comporte trois radiateurs R1, R2 et R3 répartis en deux groupes G1 et G2, une unité de gestion centrale UGC et deux unités de gestion locale UG1 et UG2. Un groupe de radiateurs désigne des radiateurs coopérant ensemble pour chauffer une même zone ou pièce de l'habitat, donc sous le contrôle d'une même unité de gestion locale.

Les radiateurs R1, R2 et R3 sont chacun munis de moyens d'actionnement de leur vanne de régulation, respectivement A1, A2 et A3. Ces moyens d'actionnement sont reliés sans fil (par exemple par radio) à l'unité de gestion centrale UGC et à une unité de gestion locale, UG1 ou UG2. L'unité de gestion centrale est placée en général au centre de l'habitat. Les unités de gestion locale sont placées en des endroits adéquats dans leur zone respective.

Dans l'exemple de la Fig. 1, l'unité de gestion locale UG1 fournit sans fil au radiateur R1 la température ambiante TA1 de la zone correspondante et une température de consigne TC1 correspondant à la température voulue pour cette zone. Il en est de même de l'unité de gestion locale UG2 et de ses radiateurs R2 et R3 qui reçoivent TA2 (température ambiante) et TC2 (température de consigne). Les unités de gestion locale comportent à cet effet une sonde de température et des moyens pour fixer la température de consigne. En pratique, les unités UG1 et UG2 se présentent sous la forme d'un boîtier thermostatique au moyen duquel on règle la température de consigne.

Par ailleurs, l'unité de gestion centrale UGC fournit à l'ensemble des radiateurs des informations de gestion en termes de niveaux de chauffe NC1, NC2 associés à des plages horaires de fonctionnement préalablement définies et de modes de fonctionnement préalablement sélectionnés par l'utilisateur pour chaque zone.

L'utilisateur peut choisir un mode de fonctionnement qui met en oeuvre en général quatre niveaux de chauffe :
- Confort : les moyens d'actionnement sont commandés pour que la température ambiante soit égale à la température de consigne;
- Réduit : les moyens d'actionnement sont commandés pour que la température ambiante soit égale à la température de consigne abaissée de 3°C;
- Hors gel : les moyens d'actionnement sont commandés pour que la température ambiante soit maintenue entre +4°C et +8°C;
- Arrêt : les moyens d'actionnement coupent la circulation d'eau chaude dans le radiateur. Cycliquement, une commande est lancée de façon à actionner la vanne pour éviter le grippage.

Pour que les informations entre les différents éléments du dispositif de régulation selon l'invention soient transmises sans fil, les unités de gestion locale UG1 et UG2 et l'unité de gestion centrale UGC sont équipées d'émetteurs tandis que les moyens d'actionnement de chaque radiateur sont munis d'un récepteur.

Tous ces éléments UGC, UG1, UG2, A1, A2 et A3 sont alimentés par piles. Pour que tous ces éléments aient une bonne autonomie de fonctionnement, il est prévu de limiter au maximum leur temps de fonctionnement. C'est ainsi que le récepteur des moyens d'actionnement est prévu pour ne fonctionner que le temps nécessaire pour recevoir les informations de l'unité de gestion centrale UGC et de son unité de gestion locale, UG1 ou UG2.

Dans le même souci de limiter la consommation d'énergie, il est également prévu que l'unité de gestion centrale UGC et les unités de gestion locale UG1 et UG2 n'émettent que périodiquement et pendant un temps très court. Le récepteur des moyens d'actionnement d'un radiateur est alors synchronisé sur l'unité de gestion centrale UGC et sur son unité de gestion locale de manière à ne se mettre en réception que pendant les fenêtres d'émission de ces unités. Bien entendu, les fenêtres d'émission sans fil des unités UGC, UG1 et UG2 sont différentes et non recouvrantes.

Pour indiquer un ordre de grandeur, la fenêtre d'émission de l'unité de gestion centrale UGC peut être de 10 ms environ tous les 15 minutes, et celle des unités de gestion locale de 10 ms environ toutes les minutes.

L'unité de gestion centrale et les unités de gestion locale sont codées. A l'installation, un apprentissage permet d'appairer le récepteur des moyens d'actionnement pour chaque radiateur à l'unité de gestion centrale et à son unité de gestion locale. L'invention concerne également les moyens relatifs à l'actionnement des vannes de régulation des radiateurs, dans un cas où celles-ci sont des vannes d'un type existant dont l'actionneur est une tige coulissante entre deux positions d'ouverture et de fermeture de vanne, et sollicitée vers la position d'ouverture par un ressort interne dans la vanne.

Le double problème que résout l'invention à ce niveau est celui de la gestion d'énergie pour une consommation minimale, ainsi que celui de l'encombrement des moyens d'actionnement de la tige étant donné que ceux-ci viennent s'adapter en saillie sur la vanne de régulation.

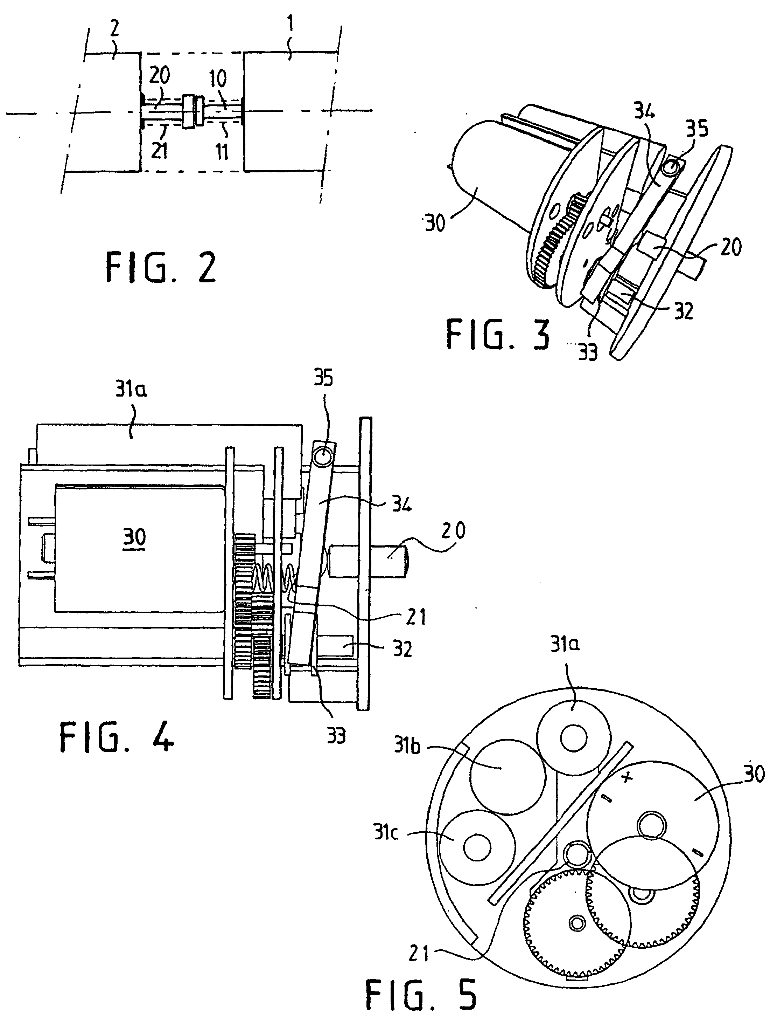

Les Figs. 2 à 5 illustrent une forme de réalisation préférée d'une solution selon l'invention, dont le principe fonctionnel est schématisé à la Fig. 2 : la vanne de régulation 1 est commandée par l'intermédiaire d'une tige coulissante 10, laquelle tige est rappelée en position d'ouverture par un ressort 11. Les moyens d'actionnement selon l'invention 2 comportent un poussoir 20 aligné avec la tige 10, lequel poussoir est sollicité à l'inverse de la tige 10 par un ressort 21 sensiblement de même puissance que le ressort 11.

Le poussoir 20 est entraîné par un moteur, par l'intermédiaire d'une transmission qui selon l'invention a un rapport de démultiplication très important, par exemple supérieur à 1000. Cette grande démultiplication résulte d'un choix privilégiant une . faible consommation car la vitesse de réponse, dans le cadre de l'application, peut être très lente. On en tire en effet l'avantage de pouvoir utiliser un moteur de faible puissance sans bruit et de bénéficier d'un frein mécanique simple et efficace du poussoir lorsque le moteur est arrêté. Dans un sens, le poussoir 20 recule devant la tige 10 qui peut donc avancer concomitamment de par la sollicitation de son ressort 11, la tige 10 et le poussoir 20 n'étant pas accrochés l'un à l'autre.

Les moyens présentés aux Figs. 3 à 5 obéissent à ce principe et sont remarquables de compacité: dans un boîtier de forme sensiblement cylindrique, sont agencés longitudinalement côte à côte un moteur 30 et trois logements 31a, 31b et 31c pour des piles bâton. En bout de moteur, et sur le côté des piles, est placé un train d'engrenages dont l'axe de sortie est une vis sans fin 32 se trouvant à l'opposé des logements 31a, 31b et 31c, sur laquelle est engagée une bague 33. A la bague 33, est articulée l'extrémité d'un bras pousseur 34 apte à pivoter autour d'un axe 35 passant dans son autre extrémité, en bout des logements de piles 31a, 31b et 31c.

Le bras pousseur 34 empêche la bague 33 de tourner sur elle-même de telle sorte que lorsque la vis sans fin 32 tourne, la bague 33 est entraînée en translation longitudinale, entraînant à son tour en pivotement le bras pousseur 34. Le bras pousseur 34 est d'autre part sollicité par le ressort de compensation précité 21 et il est en contact sensiblement au milieu de sa longueur avec le poussoir 20 qui coulisse à travers une paroi de fond du boîtier.

Bien entendu, malgré qu'elle réponde de façon satisfaisante, cette forme de réalisation n'est donnée qu'à titre d'exemple préférentiel.

## Revendications

1. Dispositif de régulation de chauffage à circulation d'eau avec
- une pluralité de radiateurs (R1,R2,R3) chacun pourvu d'une vanne de régulation (1), **caractérisé en ce que** chaque vanne de régulation (1) comprenant une tige (10) de régulation en ouverture-fermeture mobile entre deux positions extrêmes et sollicitée en déploiement vers la position ouverte par un premier ressort (11), lesdits radiateurs étant répartis en au moins un groupe d'au moins un radiateur, chaque vanne dé régulation étant équipée de moyens d'actionnement (A1,A2,A3),
- une unité de gestion centrale (UGC) reliée par une liaison sans fil auxdits moyens d'actionnement des vannes de régulation de l'ensemble des radiateurs dudit dispositif, et
- une unité de gestion pour chaque groupe de radiateurs (UG1,UG2) en relation avec les moyens d'actionnement des vannes de régulation des radiateurs du groupe de radiateurs considéré,
et **en ce que** les moyens d'actionnement de chaque vanne de régulation comportent un poussoir (20) aligné avec ladite tige (10) de la vanne de régulation pour la pousser contre la force dudit premier ressort (11), ledit poussoir (20) étant entraîné par un moteur (30) alimenté par piles, par l'intermédiaire d'une transmission dont le rapport de démultiplication est très élevé de manière à privilégier l'autonomie de fonctionnement du moteur par rapport à la vitesse de réponse.

2. Dispositif selon la revendication 1, **caractérisé en ce que** le rapport de démultiplication est supérieur à 1000.

3. Dispositif selon la revendication 1 ou 2, **caractérisé en ce que** les moyens d'actionnement comporte en outre un second ressort (21) pour solliciter le poussoir (20) à l'opposé de la tige (10) de la vanne de régulation, ledit second ressort (21) étant sensiblement de même puissance que le premier ressort (11) conduisant à diminuer considérablement l'énergie nécessaire pour mouvoir ladite tige (10).

4. Dispositif selon l'une des revendications 1 à 3, **caractérisé en ce que** lesdits moyens d'actionnement (A1,A2,A3) de chaque vanne de régulation sont en outre reliés sans fil à l'unité de gestion locale du groupe de radiateurs correspondant (UG1,UG2).

5. Dispositif selon la revendication 4, **caractérisé en ce que** l'unité de gestion centrale (UGC) et les unités de gestion locale (UG1,UG2) ont chacune des fenêtres d'émission sans fil différentes et non recouvrantes, et **en ce que** les moyens d'actionnement de la vanne de régulation de chaque radiateur sont reliés sans fil uniquement le temps nécessaire pour recevoir les informations de gestion en provenance de l'unité de gestion centrale (UGC) et de l'unité de gestion locale (UG1,UG2) correspondante.

6. Dispositif selon l'une des revendications précédentes, **caractérisé en ce que** l'unité de gestion centrale (UGC), les unités de gestion locale (UG1,UG2) et les moyens d'actionnement (A1,A2,A3) des vannes de régulation des radiateurs sont alimentés par piles.

7. Dispositif selon l'une des revendications précédentes, **caractérisé en ce que** chaque unité de gestion locale (UG1,UG2) fournit une température de consigne (TC1,TC2) et une température ambiante (TA1,TA2) aux moyens d'actionnement (A1,A2,A3) du groupe de radiateurs correspondant.

8. Dispositif selon la revendication 7, **caractérisé en ce que** l'unité de gestion centrale (UGC) fournit aux moyens d'actionnement de la pluralité de radiateurs des informations de gestion en termes de niveaux de chauffe associés à des plages horaires de fonctionnement et de modes de fonctionnement des radiateurs.

## Patentansprüche

1. Vorrichtung zur Regulierung einer Wasserumlaufheizung, die umfasst:
- mehrere Heizkörper (R1, R2, R3), die jeweils mit einem Regulierungsventil (1) versehen sind, **dadurch gekennzeichnet, dass** jedes Regulierungsventil (1) einen Regulierungsstift zum Öffnen und Schließen umfasst, der zwischen zwei Endposititionen beweglich ist und in Richtung auf die offene Stellung hin durch eine erste Feder (11) ausgefahren werden kann, welche Heizkörper auf mindestens eine Gruppe mit mindestens einem Heizkörper verteilt sind, wobei jedes Regulierungsventil mit Betätigungsmitteln (A1,A2,A3) versehen ist,
- eine zentrale Steuerungseinheit (UGC), die über eine schnurlose Verbindung mit den Betätigungsmitteln der Regulierungsventile aller Heizkörper der Vorrichtung verbunden ist, und
- eine Steuerungseinheit für jede Heizkörpergruppe (UG1, UG2), die mit den Betätigungsmitteln der Regulierungsventile der Heizkörper der jeweiligen Heizkörpergruppe zusammenhängt,
und dadurch, dass die Betätigungsmittel jedes Regulierungsventils einen Stößel (20) umfassen, der auf den Stift (10) des Regulierungsventils ausgerichtet ist, um diesen gegen die Kraft der ersten Feder (11) zu drücken, welcher Stößel (20) von einem batteriegespeisten Motor (30) angetrieben wird, und zwar mittels einer Übertragung, deren Übersetzungsverhältnis ins Schnelle sehr hoch ist, sodass es die Betriebsautonomie des Motors bezogen auf die Ansprechgeschwindigkeit begünstigt.

2. Vorrichtung nach Anspruch 1, **dadurch gekennzeichnet, dass** das Übersetzungsverhältnis ins Schnelle über 1000 liegt.

3. Vorrichtung nach Anspruch 1 oder 2, **dadurch gekennzeichnet, dass** die Betätigungsmittel ferner eine zweite Feder (21) umfassen, die den Stößel (20) gegen den Stift (10) des Regulierungsventils zieht, welche zweite Feder (21) im Wesentlichen die gleiche Kraft hat wie die erste Feder (11), was dazu führt, dass die zum Bewegen des Stifts (10) erforderliche Energie wesentlich reduziert wird.

4. Vorrichtung nach einem der Ansprüche 1 bis 3, **dadurch gekennzeichnet, dass** die Betätigungsmittel (A1,A2,A3) jedes Regulierungsventils ferner mit der lokalen Steuerungseinheit der entsprechenden Heizkörpergruppe (UG1,UG2) schnurlos verbunden sind.

5. Vorrichtung nach Anspruch 4, **dadurch gekennzeichnet, dass** die zentrale Steuerungseinheit (UGC) und die lokalen Steuerungseinheiten (UG1,UG2) jeweils unterschiedliche und sich nicht deckende Fenster der schnurlosen Ausstrahlung aurweisen, und dadurch, dass die Betätigungsmittel des Regulierungsventils jedes Heizkörpers nur so lange miteinander schnurlos verbunden sind, wie dies zum Empfang der von der zentralen Steuerungseinheit (UGC) und der entsprechenden lokalen Steuerungseinheit (UG1,UG2) kommenden Steuerungsinformationen erforderlich ist.

6. Vorrichtung nach einem der vorstehenden Ansprüche, **dadurch gekennzeichnet, dass** die Zentralsteuerungseinheit (UGC), die Lokalsteuerungseinheiten (UG1,UG2) und die Betätigungsmittel (A1,A2,A3) der Regulierungsventile der Heizkörper batteriegespeist sind.

7. Vorrichtung nach einem der vorstehenden Ansprüche, **dadurch gekennzeichnet, dass** jede Lokalsteuerungseinheit (UG1,UG2) die Betätigungsmittel (A1,A2,A3) der entsprechenden Heizkörpergruppe mit einer Solltemperatur (TC1,TC2) und einer Umgebungstemperatur (TA1,TA2) versorgt.

8. Vorrichtung nach Anspruch 7, **dadurch gekennzeichnet, dass** die Zentralsteuerungseinheit (UGC) die Betätigungsmittel der überwiegenden Zahl der Heizkörper mit Steuerungsinformationen versorgt, die in Form von Erwärmungspegeln, die an Betriebszeiten gebunden sind, und Betriebsarten der Heizkörper ausgedrückt werden.

## Claims

1. Control device for heating with circulating water, with
- a plurality of radiators (R1, R2, R3) each provided with a control valve (1), **characterised in that** each control valve (1) comprises a control rod (10) for opening and closure movable between two extreme positions and forced in deployment towards the open position by a first spring (11), said radiators being distributed in at least one group of at least one radiator, each control valve being equipped with actuating means (A1, A2, A3),
- a central management unit (UGC) connected by a wireless link to said actuating means for the control valves of all of the radiators of said device, and
- a management unit for each group of radiators (UG1, UG2) in connection with the actuating means for the control valves of the radiators of the group of radiators concerned,
and **in that** the actuating means of each control valve comprise a push-rod (20) aligned with said rod (10) of the control valve to push it against the force of said first spring (11), said push-rod (20) being entrained by a motor (30) powered by batteries, through the intermediary of a transmission the reduction ratio of which is very high so as to favour the autonomy of operation of the motor over the speed of response.

2. Device according to claim 1, **characterised in that** the reduction ratio is greater than 1000.

3. Device according to claim 1 or 2, **characterised in that** the actuating means additionally comprise a second spring (21) to force the push-rod (20) against the rod (10) of the control valve, said second spring (21) being substantially of the same power as the first spring (11) leading to a considerable reduction in the energy necessary to move said rod (10).

4. Device according to one of claims 1 to 3, **characterised in that** said actuating means (A1, A2, A3) for each control valve are additionally connected by a wireless link to the local management unit of the corresponding group of radiators (UG1, UG2).

5. Device according to claim 4, **characterised in that** the central management unit (UGC) and the local management units (UG1, UG2) each have different wireless transmission windows which do not overlap, and **in that** the actuating means for the control valve of each radiator are connected by a wireless link solely for the time necessary to receive the management information coming from the central management unit (UGC) and the corresponding local management unit (UG1, UG2).

6. Device according to one of the preceding claims, **characterised in that** the central management unit (UGC), the local management units (UG1, UG2) and the actuating means (A1, A2, A3) for the control valves of the radiators are powered by batteries.

7. Device according to one of the preceding claims, **characterised in that** each local management unit (UG1, UG2) supplies a set temperature (TC1, TC2) and an ambient temperature (TA1, TA2) to the actuating means (A1, A2, A3) for the corresponding group of radiators.

8. Device according to claim 7, **characterised in that** the central management unit (UGC) supplies the actuating means for the plurality of radiators with management information in terms of heating levels associated with operating periods and operating modes for the radiators.
